# EUROPEAN PATENT APPLICATION

(11) **EP 1 890 028 A2**
(43) Date of publication of application: **20.02.2008**
(21) Application number: 07014124.7
(22) Date of filing: 19.07.2007
(51) Int. Cl.: F02M 37/00

(54) **Fuel supply system**

(30) Priority: 08.08.2006 GB 0615638
(71) Applicant: Lowe, Derek, Northants NN12 8RF (GB)
(72) Inventor: Lowe, Derek, Northants NN12 8RF (GB)
(74) Representative: Raynor, Simon Mark

(57) **Abstract**

A fuel supply system for an internal combustion engine includes a main tank (2) for a primary fuel, an auxiliary tank (4) for a secondary fuel and a delivery system (6,8,14,16) for delivering fuel from the main and auxiliary tanks to the engine (12). The delivery system includes a control device (18) for controlling the flow of fuel from the tanks, said control device having a primary operational mode in which fuel is supplied exclusively from the main tank (2) and a secondary operational mode in which fuel is supplied from both tanks or exclusively from the auxiliary tank (4).

## Description

The present invention relates to a fuel supply system for an internal combustion engine, and a vehicle that includes a fuel supply system.

Many motorsport racing series have become a victim of their own aerodynamics, and Formula One (F1) is probably the most obvious example. Severe wake turbulence behind F1 cars has served to reduce overtaking. Aerodynamic solutions should be sought, but in the meantime other solutions might prove easier for teams to adopt.

The racing authorities have recently suggested a "push to pass button" which harnesses electrical energy recovered from regenerative braking systems. However this approach is not without considerable technical complexity, both in recovering the braking energy, then storing it and finally applying this energy as motive power as and when appropriate.

Motorsport is now seeking to raise its "green" profile and the application of alcohol-based renewable fuels has considerable merit. This invention seeks to harness the characteristics of alcohol fuels, and in particular bio-ethanol, to facilitate overtaking manoeuvres in motorsport where gasoline fuels remain the preferred choice of the sponsors, the petroleum companies and race organisers; but where more overtaking opportunities are sought on the circuit to improve entertainment value.

Normally aspirated spark ignition four-stroke engines used in competitions are restricted in their peak power output by a number of factors. Important factors are the octane rating of the fuels supplied, which are often "control fuels" that comply with certain fuel specifications determined by the controlling bodies of motor sport in conjunction with the fuel supplier. Octane ratings serve to influence the compression ratio, which has a significant influence over engine efficiency and power output. The charge density of the air entering the cylinder also has significant influence upon peak power.

Although this invention is aimed primarily at applications initially within motorsport, there may also be a number of other useful applications.

According to one aspect of the present invention there is provided a fuel supply system for an internal combustion engine, including a main tank for a primary fuel, an auxiliary tank for a secondary fuel and a delivery system for delivering fuel from the main and auxiliary tanks to the engine, the delivery system including a control device for controlling the flow of fuel from the tanks, said control device having a primary operational mode in which fuel is supplied exclusively from the main tank and a secondary operational mode in which fuel is supplied from both tanks or exclusively from the auxiliary tank.

Use of the fuel supply system provides a boost in performance and allows increased opportunities for overtaking in a motor race, thereby increasing spectator interest in the race. It thus helps to address some of the problems associated with wake turbulence. The system is mechanically simple and robust and does not require extensive modification of the car's design.

Advantageously, the delivery system includes a selector device for selecting the operational mode. This allows the driver to select when to apply the performance boost, for example when attempting to overtake.

The control device preferably includes a timer device that is constructed and arranged to limit the operational duration of the secondary operational mode. For example, the operational duration may be limited to maximum often seconds, thus forcing the driver to use his or her skill and judgement in selecting when to apply the fuel boost. Alternatively or additionally, the control device may include a timer device that is constructed and arranged to provide a delay between successive periods of operation in the secondary operational mode, thus preventing substantially continuous use.

Advantageously, the secondary fuel has a higher octane rating and/or a higher latent heat of evaporation than the primary fuel to provide an increase in charge density to the engine. This is particularly relevant to turbo-charged engines.

The primary fuel may be a petroleum-based fuel, for example gasoline (petrol) or diesel fuel. The secondary fuel is preferably an alcohol-based fuel, which may include ethanol or bio-ethanol. Alternatively it may include methanol. The alcohol-based fuel may also include water. Alcohol-based fuels increase the charge density of the fuel/air mixture as it enters the engine, thus increasing the quantity of the mixture that can be drawn into the cylinder and thereby providing a boost in power. The use of environmentally-friendly ethanol-based fuels also serves to promote public awareness of such fuels.

Alternatively, the primary fuel and the secondary fuel may both be alcohol-based fuels, the secondary fuel having a higher octane rating then the primary fuel. For example, the primary fuel may be based on ethanol and the secondary fuel may be based on methanol.

Advantageously, the main tank has a substantially larger fuel capacity than the auxiliary tank. The capacity ratio of the main and auxiliary tanks may be at least 5:1, preferably at least 10:1, and more preferably at least 20:1. As only a limited quantity of the alcohol-based secondary fuel is available the driver must use this facility prudently, thus further increasing spectator interest in the race.

According to another aspect of the present invention there is provided a road vehicle including an engine and a fuel supply system according to any one of the preceding claims.

The road vehicle is preferably a competition car. Preferably, the engine is turbo-charged,

According to one embodiment of the invention, the fuel system includes a small additional fuel tank of prescribed capacity and dimensions, which carries a quantity of alcohol-based fuel, for example bio-ethanol, or possibly bio-ethanol and water. Methanol can serve the same purpose, but it is less desirable on the grounds of toxicity. To the alcohol, other additives can be added as appropriate. Competition cars incorporating this additional alcohol supply will have an additional fuel pump and fuel supply system leading to an electronically controlled fuel injection system which will inject the alcohol-based fuel as an addition or possibly an alternative to the main fuel (e.g. gasoline or an alternative fuel) already supplied to the inlet system of the engine. The alcohol fuel may be injected by actuating a "bio-boost, push to pass button" (or "boost button"), which operates in conjunction with the engine's electronic control unit (ECU). Alternatively, the system could be operated by the throttle pedal.

Drivers then have the ability to raise engine power output for as long as the alcohol fuel remains available from the calibrated tank system. There are a number of ways to control this supply of alcohol to boost power. For example, the "bio-boost, push to pass button" can have an ECU controlled maximum time limitation of say 10 seconds for each actuation cycle; this ends when the alcohol "boost fuel" has been exhausted.

The alcohol fuel functions in the following manner. The high latent heat of evaporation of the additional alcohol serves to lower the charge temperature of the incoming air and fuel into the cylinder, this increases charge density enabling more fuel and air to enter each cylinder. The result is an increase in power. However, the higher octane rating of the alcohol and the lower initial temperature of the inlet charge both serve to reduce the risk of "spark knock". The higher flame speed of the alcohol also helps in this direction.

Initial examination of ethanol's use with normally aspirated spark ignition four-stroke engines indicates that an increase in power of around 7½% can be expected. However if the same principles are applied to turbocharged engines then a power increase of around 20% can be achieved. Clearly the flow rate of the alcohol-based secondary fuel can be determined in order to create an appropriate incremental power increase for motorsport whilst still creating a "level playing field" required by the motorsport regulators. The use of bio-ethanol will also provide a publicity boost to the emerging bio-fuels industries.

Alternatively, a similar system can be arranged using bio-ethanol (say E85) as the primary fuel and methanol as the secondary fuel supplied via the power boost system, Methanol can be created from bio-mass, as well as from methane gas and other sources.

An embodiment of the invention will now be described, by way of example, with reference to the accompanying drawing, in which:

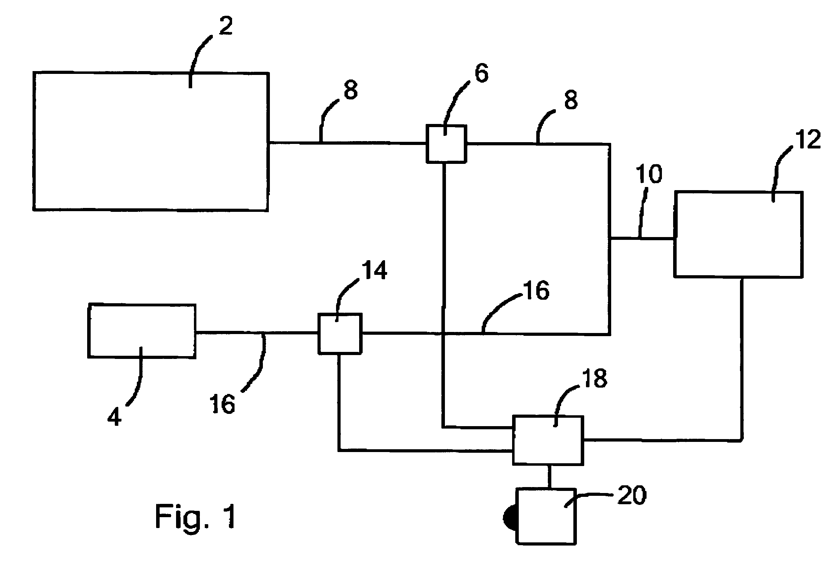

Figure 1 is a schematic diagram of a fuel system for a road vehicle.

The fuel system shown Figure 1 is intended particularly for use in competition cars, although it may of course be used in other vehicles and other applications. The fuel system includes a main fuel tank 2 for a primary fuel and an auxiliary fuel tank 4 for a secondary fuel, The auxiliary fuel tank 4 is smaller than the main tank 2 and it has a carefully calibrated capacity which is set by the motorsport authorities. For example, it may have a capacity of 5 litres. The main fuel tank will generally have a much larger capacity, for example in the region of 50 litres.

The primary fuel stored in the main fuel tank 2 is normally used for the majority of the race. It has a defined maximum octane rating. The primary fuel may for example be gasoline (petrol), or diesel fuel, or it may be an alcohol-based fuel such as ethanol.

The secondary fuel stored in the auxiliary fuel tank is intended for use only during a small part of the race, when peak power is required, for example when overtaking. It is preferably an alcohol-based fuel, such as ethanol or bio-ethanol. If ethanol is used as the primary fuel, the secondary fuel may also be an alcohol fuel but with a higher octane rating, such as methanol. In any event, the secondary fuel has a higher octane rating than the primary fuel, allowing it to deliver increased power.

As the auxiliary fuel tank has a much smaller capacity than the main fuel tank, the secondary fuel can only be used for a relatively small portion of the race. At all other times, the primary fuel from the main fuel tank will be used.

The primary fuel is pumped from the main tank 2 by a main fuel pump 6 and delivered through a main fuel supply line 8 to the fuel inlet port 10 of the engine 12. The engine may be a normal aspirated engine, or it may be supercharged or turbocharged. Similarly, the secondary fuel from the auxiliary fuel tank 4 is pumped by an auxiliary fuel pump 14 and delivered through an auxiliary fuel supply line 16 to the fuel inlet port 10 of the engine 12. Operation of the pumps 6,14 is controlled by an electronic control unit (ECU) 18, in response to operation by the driver of a boost button 20. The ECU 18 may also be connected to the engine 12, to control various functions of the engine in a conventional manner.

In use, fuel may be supplied from the main fuel tank 2 and/or the auxiliary fuel tank 4 to the engine by the pumps 6,14. Operation of the pumps is controlled by the ECU 18 in response to actuation by the driver of the boost button 20. Normally, fuel will be supplied primarily from the main fuel tank 2, which contains the primary fuel, for example gasoline or diesel fuel. However, by actuating the boost button 20, the driver may select fuel from the auxiliary tank 4, which contains the secondary fuel having a higher latent heat of evaporation than that of the primary fuel. This secondary fuel is then delivered to the engine 12 either instead of or together with the primary fuel, As a result, the maximum output power of the engine is increased, allowing the driver an increased opportunity to perform overtaking manoeuvres.

Preferably the ECU 18 includes a timer device that limits the duration of each power boost by switching back to the main fuel supply after a predetermined time (for example 10 seconds). It may also prevent reactivation of the boost button 20 until another predetermined period of time has elapsed, to prevent substantially continuous use. In practice, activation of the boost button is also limited by the restricted quantity of fuel stored in the auxiliary fuel tank.

The alcohol-based secondary fuel stored in the auxiliary fuel tank functions in the following manner. The higher latent heat of evaporation of the alcohol serves to lower the charge temperature of the incoming air and fuel: this increases the charge density of the fuel/air mixture and enables more fuel and air to enter each cylinder. The result is an increase in power. The high octane rating of the alcohol and the low initial temperature of the inlet charge both serve to reduce the risk of "spark knock". The higher flame speed of the alcohol also helps in this respect.

The advantage provided by the invention is that it allows increased opportunities for overtaking, thereby increasing spectator interest in the race. However, as only a limited quantity of the alcohol-based secondary fuel is available, the driver must use this facility with caution. The use of environmentally friendly ethanol or bio-ethanol as the secondary fuel also serves to promote public awareness of such fuels.

Various modifications of the invention are of course possible. For example, the ECU 18 may be arranged to control the operation of fuel supply valves or any other fuel supply mechanism, in order to control the flow of fuel from each of the fuel tanks to the engine. It may also be arranged to sense the level of fuel in each of the fuel tanks and prevent activation of a fuel pump when the associated fuel tank is empty or nearly empty.

The fuel system may also be used in other applications, for example in conventional turbo-charged road-going cars.

## Claims

1. A fuel supply system for an internal combustion engine including a main tank for a primary fuel, an auxiliary tank for a secondary fuel and a delivery system for delivering fuel from the main and auxiliary tanks to the engine, the delivery system including a control device for controlling the flow of fuel from the tanks, said control device having a primary operational mode in which fuel is supplied exclusively from the main tank and a secondary operational mode in which fuel is supplied from both tanks or exclusively from the auxiliary tank.

2. A fuel supply system according to claim 1, in which the delivery system includes a selector device for selecting the operational mode.

3. A fuel supply system according to claim 1 or claim 2, in which the control device includes a timing device that is constructed and arranged to limit the operational duration of the secondary operational mode.

4. A fuel supply system according to any one of the preceding claims, in which the control device includes a timing device that is constructed and arranged to provide a delay between successive periods of operation in the secondary operational mode.

5. A fuel supply system according to any one of the preceding claims, in which the secondary fuel has a higher latent heat of evaporation than the primary fuel.

6. A fuel supply system according to any one of the preceding claims, in which the secondary fuel has a higher octane rating than the primary fuel.

7. A fuel supply system according to any one of the preceding claims, in which the primary fuel is a petroleum-based fuel.

8. A fuel supply system according to any one of the preceding claims, in which the secondary fuel is an alcohol-based fuel, preferably ethanol or bio-ethanol.

9. A fuel supply system according to claim 8, in which the alcohol-based fuel includes water.

10. A fuel supply system according to any one of claims 1 to 6, in which the primary fuel and the secondary fuel are both alcohol-based fuels.

11. A fuel supply system according to any one of the preceding claims, in which the main tank has a substantially larger fuel capacity than the auxiliary tank.

12. A fuel supply system according to claim 11, in which the capacity ratio of the main and auxiliary tanks is at least 5:1, preferably at least 10:1, more preferably at least 20:1.

13. A road vehicle including an engine and a fuel supply system according to any one of the preceding claims.

14. A road vehicle according to claim 13, wherein the road vehicle is a competition car.

15. A road vehicle according to claim 13 or claim 14, wherein the engine is turbo-charged.
